# EUROPEAN PATENT APPLICATION

(11) **EP 3 132 971 A1**
(43) Date of publication of application: **22.02.2017**
(21) Application number: 15779851.3
(22) Date of filing: 10.03.2015
(51) Int. Cl.: B60P 3/12, B60P 1/43

(54) **PLATFORM FOR A VEHICLE-CARRIER LORRY**

(30) Priority: 16.04.2014 ES 201430531
(71) Applicant: Nicolas Gil, Diego, 30500 Molina de Segura (Murcia) (ES)
(72) Inventor: Nicolas Gil, Diego, 30500 Molina de Segura (Murcia) (ES)
(74) Representative: Temiño Ceniceros, Ignacio
(86) International application number: PCT/ES2015/070167
(87) International publication number: WO 2015/158941

(57) **Abstract**

The invention relates to a platform (1) for a vehicle-carrier lorry (3), comprising a frame (4) that is movable longitudinally and is tiltable, actuation means for actuating said frame (4), longitudinal guides (5) secured to said frame (4), a head (6) which travels along said guides (5), a loading sector (7) provided with front hinges (8) for attaching to the head (6) and rear-rolling means, and actuation means for actuating the head (6).

## Description

### TECHNICAL FIELD

The present invention relates to a platform for a vehicle-carrier lorry.

### PRIOR ART

Vehicle-carrier lorries are today known to have a rear platform that is tiltable and is movable longitudinally for the purpose of moving their rear end closer to the ground enough so that the vehicle to be loaded can be hoisted by a winch through the platform, and which in this arrangement forms a type of ramp in continuity with the ground.

The drawback of these platforms is that the angle they form with the ground, i.e., the configured ramp inclination, is very pronounced due to the functional height in the transport position of the platform itself on the chassis of the lorry, and the short length of same, for which reason it is provided with longitudinal movement, without this movement being able to achieve a small enough inclination so that the front skirts of some vehicles, particularly sport vehicles, do not hit the platform, and even possibly damaging same.

This entails a technical problem because damage in vehicles of this type occurs without there being any alternatives to avoid it.

### DISCLOSURE OF THE INVENTION

The platform for a vehicle-carrier lorry of the invention has a configuration that solves the technical problem considered because it is capable of achieving zero inclination, i.e., it is supported directly on the ground, such that the vehicle to be loaded only has to be raised up by a magnitude that is equivalent to the thickness of the platform itself.

According to the invention, the platform comprises a frame that is movable longitudinally and is tiltable, with actuation means for actuating the movements of this frame, longitudinal guides secured to said frame, a head which travels along said guides, a loading sector provided with front hinges for attaching to the head and rear rolling means, and actuation means for actuating the head.

The actuations of the frame are capable of placing its rear end considerably flush with the ground, such that the movement of the head through its actuation means, makes the loading sector, which is the platform where the vehicle *per se* is loaded, roll through the rear rolling means on the ground or surface, being deployed until it is supported on the ground, also as a result of the front hinges for attaching to the head.

Once the vehicle has been raised up and loaded, the head is actuated in the pulling or upward direction in order to recover the loading sector, and then the frame is again positioned horizontally and in an advanced position, wherein transport of the vehicle can begin.

### DESCRIPTION OF THE DRAWINGS

Figure 1 shows a view of the platform for a vehicle-carrier lorry of the invention.
Figure 2 shows a detail of covering means of rear rolling means of the loading sector of the platform for a vehicle-carrier lorry of the invention.
Figure 3 shows a schematic view of the actuation of the head of the platform for a vehicle-carrier lorry of the invention.
Figures 4 and 5 show respective sequences of the deployment and recovery of the loading sector of the platform for a vehicle-carrier lorry of the invention when loading a vehicle.

### DETAILED DISCLOSURE OF THE INVENTION

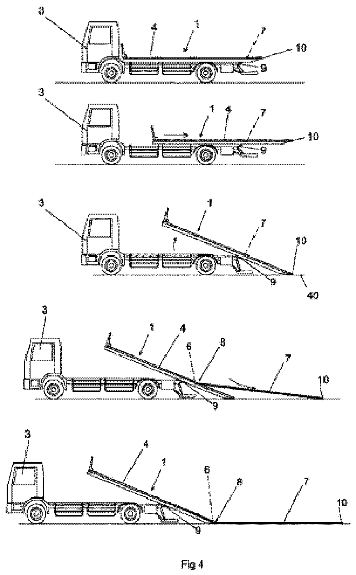

The platform (1) for a vehicle-carrier lorry (3) of the invention is particularly designed to allow it being placed such that it is supported directly on and coplanar with the ground (40), as seen in Figure 4, for raising up the vehicle (2) in question, which is particularly useful in vehicles with skirts leaving little free height with respect to the ground (40), because existing platforms are always inclined with respect to the ground with angles making the skirts of these vehicles hit the platform and become damaged.

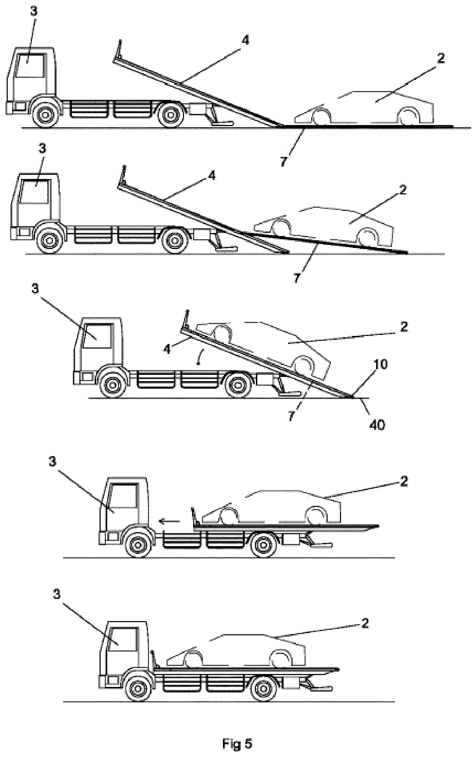

According to the invention, the platform (1) comprises a frame (4) that is movable longitudinally and is tiltable in order to move its rear end closer to the ground (40), as seen in the sequences of Figures 4 and 5, actuation means for actuating the movements of said frame (4), longitudinal guides (5) secured to said frame (4), a head (6) which travels along said guides (5) and a loading sector (7) provided with front hinges (8) for attaching to the head (6) and rear rolling means, as well as actuation means for actuating the head (6).

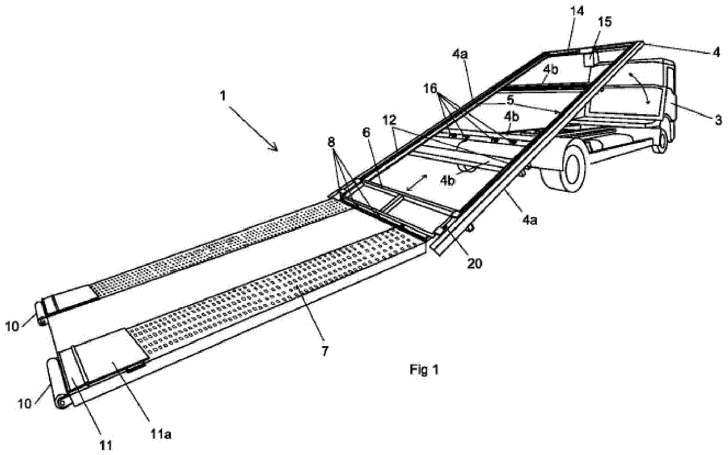

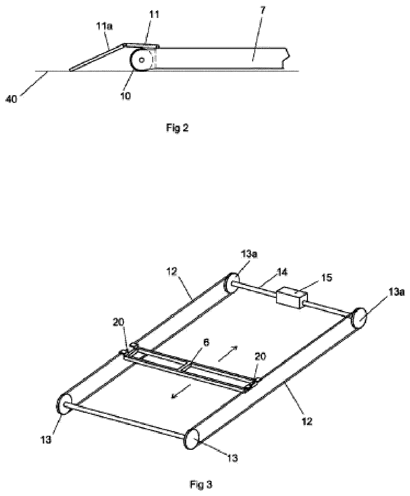

The actuation means for actuating the frame (4) comprise pistons (9). In turn, the longitudinal guides (5) are arranged in the longitudinal members (4a) of the frame (4) as seen in Figure 1, whereas the rear rolling means of the loading sector (7) comprise first rollers (10). These first rollers (10) have covering means to allow pulling on vehicles that are raised up onto the loading sector (7), because said pulling would otherwise turn these first rollers (10) without driving the vehicle (2). In this embodiment of the invention, the covering means of the first rollers (10) comprise hinged lids with a portion (11) for covering the roller and a portion (11 a) for being raised up onto the loading sector, configuring a ramp, as seen in Figure 2.

The head (6) has its own actuation means, which in this embodiment of the invention comprise chains (12) arranged in the proximity of both guides (5), travelling between respective pairs of side end wheels (13, 13a) (see Figure 3), some of said wheels being operated by a drive shaft (14), specifically the front wheels (13a). This drive shaft (14) is operated by a hydraulic motor (15), whereas the chains are connected to the head (6) through tensioning devices (20) which allow adjusting their tension according to the temperature and fatigue of the materials, as well as perfectly aligning the head (6).

It has been envisaged that the frame (4) has intermediate cross-members (4b) for stiffening same, second rollers (16) for the rolling of the loading sector (7) having been arranged in some of said members (4b), which furthermore provide supports for it and prevent buckling or excessive strain thereof.

In the sequences of operation shown in Figures 4 and 5, it can be seen how the loading sector (7) is capable of being positioned such that it is supported on the ground (40) before raising up the vehicle (2), and then said loading sector (7) is pulled by the chains (12) to its position on the frame (4) and said frame (4) in turn is placed horizontally in the transport position.

Having sufficient described the nature of the invention as well as the manner of putting it into practice, it must be stated that the arrangements indicated above and depicted in the attached drawings are susceptible to modifications in detail provided to the extent that such modifications do not change the fundamental principle.

## Claims

1. A platform (1) for a vehicle-carrier lorry (3), **characterised in that** it comprises a frame (4) that is movable longitudinally and is tiltable, actuation means for actuating said frame (4), longitudinal guides (5) secured to said frame (4), a head (6) which travels along said guides (5), a loading sector (7) provided with front hinges (8) for attaching to the head (6) and rear rolling means, and actuation means for actuating the head (6).

2. The platform (1) for a vehicle-carrier lorry (3) according to claim 1, **characterised in that** the actuation means for actuating the frame (4) comprise pistons (9).

3. The platform (1) for a vehicle-carrier lorry (3) according to claim 1 or 2, **characterised in that** the longitudinal guides (5) are arranged on the longitudinal members (4a) of the frame (4).

4. The platform (1) for a vehicle-carrier lorry (3) according to any of the preceding claims, **characterised in that** the rear rolling means of the loading sector (7) comprise first rollers (10).

5. The platform (1) for a vehicle-carrier lorry (3) according to claim 4, **characterised in that** the first rollers (10) comprise covering means.

6. The platform (1) for a vehicle-carrier lorry (3) according to claim 5, **characterised in that** the covering means of the first rollers (10) comprise hinged lids.

7. The platform (1) for a vehicle-carrier lorry (3) according to claim 6, **characterised in that** the hinged lids comprise a portion (11) for covering the roller and a portion (11 a) for being raised up onto the loading sector.

8. The platform (1) for a vehicle-carrier lorry (3) according to any of the preceding claims, **characterised in that** the actuation means for actuating the head (6) comprise chains (12).

9. The platform (1) for a vehicle-carrier lorry (3) according to claim 8, **characterised in that** the chains (12) are arranged in the proximity of both guides (5), travelling between respective pairs of side end wheels (13, 13a), and some of said wheels being operated by a drive shaft (14).

10. The platform (1) for a vehicle-carrier lorry (3) according to claim 9, **characterised in that** the drive shaft (14) is operated by a hydraulic motor (15).

11. The platform (1) for a vehicle-carrier lorry (3) according to any of claims 8 to 10, **characterised in that** the chains are connected to the head (6) through tensioning devices (20).

12. The platform (1) for a vehicle-carrier lorry (3) according to any of the preceding claims, **characterised in that** the frame (4) has intermediate cross-members (4b).

13. The platform (1) for a vehicle-carrier lorry (3) according to claim 12, **characterised in that** some of the intermediate cross-members (4b) have second rollers (16) for the rolling of the loading sector (7).
